# EUROPEAN PATENT SPECIFICATION

(11) **EP 0 509 827 B1**
(45) Date of publication and mention of the grant of the patent: **17.01.1996**
(21) Application number: 92303451.6
(22) Date of filing: 16.04.1992
(51) Int. Cl.: G02F 1/1343, G02F 1/1335

(54) **A colour electrooptical device**
Farbige elektrooptische Vorrichtung
Dispositif électro-optique en couleurs

(30) Priority: 16.04.1991 JP 84284/91
(43) Date of publication of application: 21.10.1992
(73) Proprietor: SEIKO INSTRUMENTS INC., Tokyo 136 (JP)
(72) Inventor: Kamamori, Hitoshi, Koto-ku, Tokyo (JP); Fukuchi, Takakazu, Koto-ku, Tokyo (JP); Suginoya, Mitsuru, Koto-ku, Tokyo (JP); Iwasa, Koji, Koto-ku, Tokyo (JP)
(74) Representative: Sturt, Clifford Mark

(56) References cited:
- EP-A- 0 326 112
- EP-A- 0 332 401
- US-A- 4 781 444
- US-A- 4 853 296
- US-A- 4 859 036

## Description

The present invention relates to an active matrix type liquid crystal colour display unit used for office automation machines and computer terminal units.

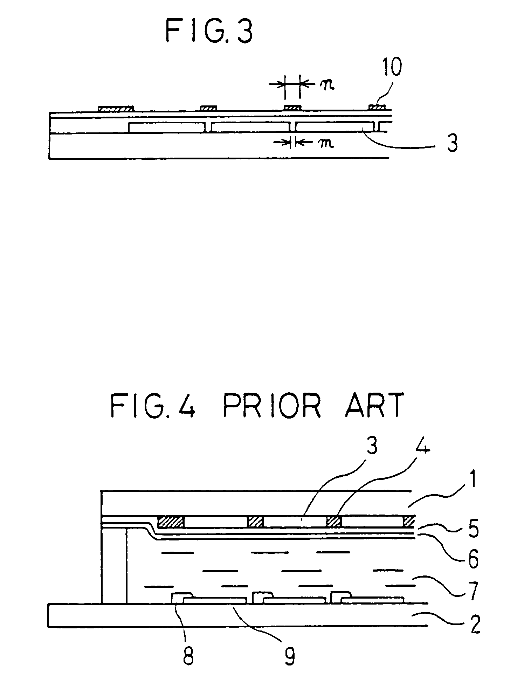

A prior art active matrix type multi-colour display unit is shown in Fig. 4 and comprises a TFT substrate 2 having switching elements 8 and picture element electrodes 9, three primary colour (R, G, B) colouring layers 3, light blocking layers 4 disposed in gaps between the colouring layers 3, a colouring layer protecting film 5 laminated on the colouring layers 3 and a colour filter substrate 1 laminated thereon and comprising a transparent electrode 6 which is a display common electrode. Liquid crystal 7, for example, is pinched between those two electrodes.

Recently, it has been desirable to lower the resistance of the common electrode 6 of the active matrix type multi-colour display unit to improve is picture quality. However, it is not easy to lower the resistance since the common electrode has to be a transparent electrode. Moreover, the transparent electrode has to be formed on the colouring layer which has no heat resistance, so that the conditions for forming the film are restricted, rendering the lowering of the resistance more difficult.

EP-A-0 326 112 and US-A-4 853 296 suggest arrangements for reducing the resistivity of the common electrode of electrooptical devices. However, the colouring layers are not spaced apart, and therefore cannot be formed by electrodeposition.

Accordingly, it is an object of the present invention to solve the aforementioned problems and to obtain a high picture quality multi-colour display unit by providing a low resistance common electrode.

It is another object of the present invention to provide low cost colour electroopical devices.

According to one aspect of the present invention, there is provided a colour electrooptical device comprising: an active matrix substrate having a plurality of switching elements and picture element electrodes; a colour filter substrate parallel to the active matrix substrate; and a liquid crystal material sandwiched between said active matrix substrate and said colour filter substrate, wherein the colour filter substrate comprises a plurality of colouring layers formed on a transparent substrate, a transparent conductive film layer formed on the colouring layers, and a metal film layer having a plurality of spaced-apart portions formed on the transparent conductive film layer over a region between the colouring layers to decrease the resistivity of the transparent conductive film layer and to shade light transmittance to and from the region, characterised in that the colouring layers are electrodeposited and are spaced apart, the gap between adjacent colouring layers being less than the width of the portions of the metal film layer.

According to another aspect of the present invention, there is provided a method of forming a colour electrooptical device as defined in the preceding paragraph, comprising: electrodepositing a plurality of colouring layers spaced apart by a gap on a transparent substrate; depositing a transparent conductive film layer over said colouring layers; and depositing a metal film layer having a plurality of spaced-apart portions on said transparent conductive film layer such that the gap between the colouring layers is less than the width of the portion of the metal film layer.

In the multi-colour display unit structured as described above, the resistance value of the common electrode effectively can be lowered since the metal film is directly formed on it.

Accordingly, the present invention readily enables the resistance of the common electrode to be lowered, which has been difficult in the past, by forming the metal film on the common electrode as the light blocking film and as a result provides a high picture quality multi-colour display unit.

Furthermore, since the resistance value of the common electrode itself can be high, the thickness of the ITO (Indium Tin Oxide) film, for example, may be reduced, so that the transmittivity of the ITO may be improved and the time for forming the ITO may be shortened. The former leads to a further improvement of the picture quality of the multi-colour display unit and the latter contributes to the lowering of the cost.
Fig. 1 is a drawing illustrating an embodiment of the present invention;
Fig. 2 is a drawing illustrating the production steps of a colour filter substrate according to the present invention;
Fig. 3 is a drawing illustrating another aspect of the present invention;
   and
Fig. 4 is a drawing illustrating a prior art example.

The present invention will be described in the following in connection with the preferred embodiments thereof with reference to accompanying drawings.

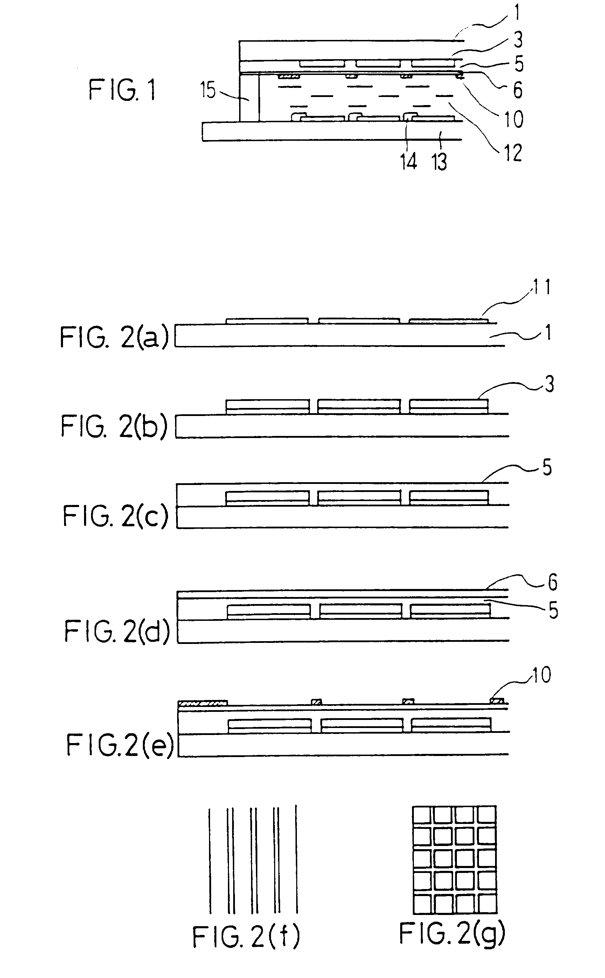

Fig. 1 shows an embodiment of the present invention. A colour filter substrate 1 was formed first by forming colouring layers 3, then forming a protection film 5 to protect or flatten the colouring layers and then forming an ITO film 6 by low temperature sputtering.

The colour filter substrate 1 is disposed on an active matrix substrate 13 so as to sandwich a liquid crystal material 12 and sealing material 15. A plurality of switching elements are formed on the active matrix substrate 13 to control the electrical charges for the liquid crystal layer.

The thickness of the film was 1 x 10⁻⁷m and the sheet resistance value was 50 ohms. A chromium (Cr) film was formed thereon and was etched into a grid shape to form light blocking films 10. The resistance value of the ITO could be thus reduced to 10 ohms as a result of the Cr film. It is desirable to have the protection film 5 to improve the reliability of the unit, though it may not be necessary depending on the property of the material of the colouring layer.

When a multi-colour display unit as shown in Fig. 1 was fabricated using this colour filter substrate, a high picture quality display unit having totally no unevenness of contrast across the whole Screen could be obtained.

Fig. 2 shows the production steps of the colour filter substrate wherein the colouring layer is formed by electro-deposition.

An ITO film 11 is formed on an insulating substrate 1 by sputtering or any other suitable method and is etched into an arbitrary pattern in anticipation of the electro-deposition (Fig. 2a). A stripe pattern as shown in Fig. 2f is most suitable.

A colouring layer 3 is formed on the ITO film by electro-deposition (Fig. 2b). If colouring layers for a plurality of colours are to be formed at this time, the electro-deposition is repeatedly performed per each colour.

A protection film 5 is formed by a spinning method or any other suitable method as shown in Fig. 2c. This protection film may not be necessary. Then an ITO film 6 is formed by sputtering or any other suitable method (Fig. 2d). At this time, since the colouring layer has been already formed on the substrate, during formation of the film the temperature is preferred to be less than 250 °C. In use, this ITO film 6 is used as a driving common electrode of the display unit.

Then a metal film 10, for example chromium (Cr) or other suitable metals, Cr is formed by sputtering or any other such method and is etched so that it can be used as a light blocking film pattern (Fig. 2e). Any patterns, such as a grid pattern as shown in Fig. 2g, may be formed.

The colour filter substrate having a low resistance transparent electrode similar to that in the first embodiment can be fabricated from the above steps and a high picture quality multi-colour display unit can be obtained.

As seen from the present embodiment, the present invention uses a grid shape light blocking film suitable for active matrix type multi-colour display units, so that a low cost multi-colour display unit may be provided.

Fig. 3 shows how the gap m between the colouring layers 3 has a relationship of m < n where n is the width of the light blocking film 10. Thereby obviating any dislocation which may be brought about between the light blocking film 10 and the colour filter 3. Accordingly there is no decrease in the picture quality due to any dislocation and at the same time, yields in the production process can be improved.

## Claims

1. A colour electrooptical device comprising:
an active matrix substrate (13) having a plurality of switching elements and picture element electrodes;
a colour filter substrate (1) parallel to the active matrix substrate (13); and
a liquid crystal material (12) sandwiched between said active matrix substrate (13) and said colour filter substrate (1),
wherein the colour filter substrate (1) comprises a plurality of colouring layers (3) formed on a transparent substrate (1), a transparent conductive film layer (6) formed on the colouring layers (3), and a metal film layer (10) having a plurality of spaced-apart portions formed on the transparent conductive film layer (6) over a region between the colouring layers (3) to decrease the resistivity of the transparent conductive film layer (6) and to shade light transmittance to and from the region,
characterised in that the colouring layers (3) are electrodeposited and are spaced apart, the gap (m) between adjacent colouring layers (3) being less than the width (n) of the portions of the metal film layer (10).

2. A colour electrooptical device according to claim 1,
wherein a further transparent protective film layer (5) is also formed between the transparent conductive film layer (6) and the colouring layer (3).

3. A method of forming a colour electrooptical device as claimed in any one of the preceding claims, comprising:
electrodepositing a plurality of colouring layers (3) spaced apart by a gap (m) on a transparent substrate (1);
depositing a transparent conductive film layer (6) over said colouring layers (3); and
depositing a metal film layer (10) having a plurality of spaced-apart portions on said transparent conductive film layer (6) such that the gap (m) between the colouring layers (3) is less than the width (n) of the portions of the metal film layer (10).

4. A method as claimed in claim 3,
wherein a further transparent protective film layer (5) is also formed between the transparent conductive film layer (6) and the colouring layer (3).

## Patentansprüche

1. Farb-elektrooptische Vorrichtung, umfassend:
ein aktives Matrixsubstrat (13) mit einer Mehrzahl von Schaltelementen und Bildelementelektroden, ein Farbfiltersubstrat (1) parallel zu dem aktiven Matrixsubstrat (13), und
ein Flüssigkristallmaterial (12), welches sandwichartig zwischen dem aktiven Matrixsubstrat (13) und dem Farbfiltersubstrat (1) angeordnet ist, worin das Farbfiltersubstrat (1) eine Mehrzahl von Färbungsschichten (3) umfaßt, welche auf einem transparenten Substrat (1) gebildet sind, eine transparente leitfähige Filmschicht (6), welche auf den Färbungsschichten (3) gebildet ist, und eine Metallfilmschicht (10), welche eine Mehrzahl von zueinander im Abstand angeordneten Abschnitten aufweist, die auf der transparenten leitfähigen Filmschicht (6) über einem Bereich zwischen den Färbungsschichten (3) gebildet sind, um den spezifischen Widerstand der transparenten leitfähigen Filmschicht (6) zu senken und eine Lichttransmission zu und von dem Bereich
abzuschirmen,
dadurch gekennzeichnet,
daß die Färbungsschichten (3) elektrisch abgelagert sind und zueinander im Abstand angeordnet sind, wobei der Zwischenraum (m) zwischen benachbarten Färbungsschichten (3) kleiner ist als die Breite (n) der Abschnitte der Metallfilmschicht (10) .

2. Farb-elektrooptische Vorrichtung nach Anspruch 1, worin eine weitere transparente Schutzfilmschicht (5) ebenso zwischen der transparenten leitfähigen Filmschicht (6) und der Färbungsschicht (3) gebildet ist.

3. Verfahren zum Bilden einer farb-elektrooptischen Vorrichtung nach einem der vorangehenden Ansprüche, umfassend:
das elektrische Ablagern einer Mehrzahl von Färbungsschichten (3), die auf einem transparenten Substrat (1) durch einen Zwischenraum (m) getrennt sind, Ablagern einer transparenten leitfähigen Filmschicht (6) über den Färbungsschichten (3), und
Ablagern einer Metallfilmschicht (10) mit einer Mehrzahl von im Abstand zueinander angeordneten Abschnitten auf der transparenten leitfähigen Filmschicht (6) derart, daß der Zwischenraum (m) zwischen den Färbungsschichten (3) kleiner ist als die Breite (n) der Abschnitte der Metallfilmschicht (10).

4. Verfahren nach Anspruch 3, worin eine weitere transparente Schutzfilmschicht (5) ebenso zwischen der transparenten leitfähigen Filmschicht (6) und der Färbungsschicht (3) gebildet wird.

## Revendications

1. Un dispositif électro-optique en couleurs comprenant :
un substrat de matrice active (13) ayant un ensemble d'éléments de commutation et d'électrodes d'éléments d'image;
un substrat de filtre de couleurs (1) parallèle au substrat de matrice active (13); et
un matériau à cristal liquide (12) intercalée entre le substrat de matrice active (13) et le substrat de filtre de couleurs (1),
dans lequel le substrat de filtre de couleurs (1) comprend un ensemble de couches de coloration (3), formées sur un substrat transparent (1), une pellicule conductrice transparente (6) formée sur les couches de coloration (3), et une pellicule de métal (10) ayant un ensemble de parties mutuellement à distance formées sur la pellicule conductrice transparente (6), sur une région comprise entre les couches de coloration (3), pour diminuer la résistivité de la pellicule conductrice transparente (6) et pour réduire le facteur de transmission de la lumière vers la région précitée et à partir de celle-ci,
caractérisé en ce que les couches de coloration (3) sont formées par électrodéposition et sont mijtuellement à distance, la distance (m) entre des couches de coloration (3) adjacentes étant inférieur à la largeur (n) des parties de la pellicule de métal (10).

2. Dispositif électro-optique en couleurs selon la revendication 1,
dans lequel une pellicule de protection transparente (5) supplémentaire est également formée entre la pellicule conductrice transparente (6) et la couche de coloration (3).

3. Procédé de formation d'un dispositif électro-optique en couleurs selon l'une quelconque des revendications précédentes, comprenant :
l'électrodéposition d'un ensemble de couches de coloration (3) mutuellement à distance d'un écartement (m) sur le substrat transparent (1);
le dépôt d'une pellicule conductrice transparente (6) sur les couches de coloration (3); et
le dépôt d'une pellicule de métal (10) ayant un ensemble de parties mutuellement à distance sur la pellicule conductrice transparente (6), de façon que l'écartement (m) entre les couches de coloration (3) soit inférieur à la largeur (n) des parties de la couche de métal (10).

4. Procédé selon la revendication 3, dans lequel une pellicule de protection transparente (5) supplémentaire est également formée entre la pellicule conductrice transparente (6) et la couche de coloration (3).
